# FASCICULE DE BREVET EUROPEEN

(11) **EP 3 766 014 B1**
(45) Date de publication et mention de la délivrance du brevet: **01.06.2022**
(21) Numéro de dépôt: 19717514.4
(22) Date de dépôt: 28.02.2019
(51) Int. Cl.: G06K 19/07, H01Q 1/22

(54) **MICROCIRCUIT SANS CONTACT AVEC GESTION D'ALIMENTATION**
KONTAKTLOSE MIKROSCHALTUNG MIT LEISTUNGSVERSORGUNGSVERWALTUNG
CONTACTLESS MICROCIRCUIT WITH POWER SUPPLY MANAGEMENT

(30) Priorité: 13.03.2018 FR 1852167
(43) Date de publication de la demande: 20.01.2021
(73) Titulaire: WISekey Semiconductors, 13590 Meyreuil (FR)
(72) Inventeur: BOTTARO, Henri, 13320 Bouc Bel Air (FR); GODZINSKI, Stéphane, 13790 PEYNIER (FR)
(74) Mandataire: Marchand, André
(86) Numéro de dépôt international: PCT/FR2019/050457
(87) Numéro de publication internationale: WO 2019/175489

(56) Documents cités:
- JP-A- H11 296 627
- US-A1- 2012 049 942
- US-A1- 2012 120 989

## Description

La présente invention concerne les microcircuits ou circuits intégrés sans contact, et en particulier les microcircuits RFID (Radio Frequency IDentification) ou à champ proche NFC (Near Field Communication) conformes à l'un des standards ISO/IEC 14443, 15693, 18000-3 et 18092.

Les microcircuits sans contact, RFID ou NFC ont été développés pour pouvoir effectuer des transactions avec un terminal de lecture, par couplage inductif ou par couplage de champ électrique. Ces microcircuits sont utilisés couramment dans de nombreuses applications telles que le paiement (cartes bancaires), la billetterie (transports publics, événements), le contrôle d'accès, et la vérification d'identité (passeports, cartes d'identité).

Pour réaliser une transaction (échange de données) avec un terminal de lecture, une communication doit pouvoir être établie avec le terminal. Lorsque cette communication est établie par couplage inductif, le terminal excite une bobine d'antenne en y appliquant un courant alternatif, ce qui produit un champ magnétique qui induit un courant dans une bobine d'antenne connectée au microcircuit. Une telle communication implique qu'un facteur de couplage inductif suffisant soit obtenu entre la bobine d'antenne du terminal et la bobine d'antenne du microcircuit. Ce facteur de couplage dépend des tailles respectives des bobines d'antenne du terminal et du microcircuit, et de la distance et des positions relatives de ces deux bobines. Plus la bobine du microcircuit est proche de celle du terminal, plus le facteur de couplage entre les deux bobines peut être élevé.

Les microcircuits conformes au standard ISO-14443 sont généralement conçus pour fonctionner à une distance de la bobine du terminal comprise entre 0 et 4 cm. Si cette distance augmente, la communication entre le microcircuit et le terminal risque d'être perdue. En outre, les microcircuits sans contact sont généralement alimentés par l'énergie extraite du champ électromagnétique reçu du terminal de lecture. A cet effet, ils comportent un circuit de régulation de tension adaptés pour fournir une tension régulée, calée sur la tension nominale d'alimentation du processeur intégré dans le microcircuit. Il en résulte que si l'amplitude du champ reçu par le microcircuit est insuffisante, l'énergie susceptible d'être extraite du champ reçu peut être insuffisante pour faire fonctionner le circuit de régulation de tension.

Il est donc souhaitable de pouvoir augmenter la distance maximum de communication sans contact entre un terminal de lecture et un microcircuit sans contact. Il peut être également souhaitable d'obtenir un tel résultat avec un terminal de lecture classique, c'est-à-dire sans avoir à modifier ce dernier, et donc, notamment, sans augmenter la puissance du champ émis par le terminal. Il peut être également souhaitable d'obtenir un tel résultat sans avoir à augmenter notablement la taille du microcircuit, et sans qu'il soit nécessaire de lui adjoindre une source d'énergie supplémentaire ou un moyen de stockage d'énergie.

Les documents US 2012/120989 A1, US 2012/049942 A1 et JP H11 296627 A divulguent des exemples de microcircuits sans contact.

Des modes de réalisation concernent un procédé de gestion de l'alimentation dans un microcircuit sans contact, le procédé comprenant des étapes consistant à : recevoir un champ électromagnétique variable par l'intermédiaire d'une bobine d'antenne du microcircuit sans contact, extraire du champ reçu un courant d'alimentation du microcircuit sans contact, déclencher dans le microcircuit sans contact un circuit de mesure pour mesurer une intensité du champ reçu, et acquérir une mesure du champ à l'aide du circuit de mesure, et désactiver le circuit de mesure lorsque la mesure de champ est acquise, et commander un circuit d'horloge et/ou un circuit d'alimentation régulé du microcircuit sans contact, couplés à des circuits numériques du microcircuit sans contact, en fonction de la mesure de champ acquise, afin de diminuer une consommation électrique des circuits numériques lorsque la mesure de champ est inférieure à une valeur de seuil.

Selon un mode de réalisation, les circuits numériques sont au moins en partie désactivés pendant l'acquisition de la mesure de champ.

Selon un mode de réalisation, le déclenchement du circuit de mesure est effectué à la suite de la détection d'un événement dans un signal reçu par la bobine d'antenne.

Selon un mode de réalisation, l'événement est un signal de fin de trame apparaissant dans le signal reçu par la bobine d'antenne du microcircuit, le signal de fin de trame étant conforme au standard ISO/IEC 14443.

Selon un mode de réalisation, le déclenchement du circuit de mesure est effectué à la suite de la détection d'un événement par un processeur des circuits numériques, le processeur commandant l'activation du circuit de mesure à la suite de la détection de l'événement.

Selon un mode de réalisation, le circuit de mesure est déclenché plusieurs fois durant une session de communication sans contact entre le microcircuit sans contact et un terminal de lecture.

Selon un mode de réalisation, la mesure de champ acquise est un mot de plusieurs bits, le procédé comprenant la sélection d'un point de fonctionnement des circuits numériques parmi plusieurs points de fonctionnement définis chacun par une valeur de commande du circuit d'horloge associée à une valeur de commande du circuit d'alimentation.

Selon un mode de réalisation, l'acquisition d'une mesure de champ comprend des étapes consistant à : prélever une première fraction d'un premier courant redressé entre une sortie du courant redressé issu de la bobine d'antenne et une première borne de la bobine d'antenne, prélever une seconde fraction du courant redressé, entre la sortie du courant redressé issu de la bobine d'antenne et une seconde borne de la bobine d'antenne, générer un courant de mesure en additionnant les première et seconde fractions de courant redressé, filtrer le courant de mesure, et convertir le courant filtré en une valeur numérique de mesure représentative de l'intensité du courant filtré.

Des modes de réalisation peuvent également concerner un microcircuit sans contact comprenant : une bobine d'antenne pour recevoir et émettre des signaux d'une communication sans contact au moyen d'un champ électromagnétique modulé, un circuit d'alimentation primaire pour extraire de la bobine d'antenne un courant d'alimentation apparaissant lorsque la bobine d'antenne est placée dans un champ électromagnétique variable, un circuit de mesure de champ configuré pour mesurer une intensité du champ reçu par la bobine d'antenne, un circuit d'horloge et un circuit de régulation de tension, et des circuits numériques configurés pour détecter un événement dans le microcircuit sans contact, et lors de la détection de l'événement : déclencher le circuit de mesure pour mesurer une intensité du champ reçu, acquérir une mesure du champ à l'aide du circuit de mesure, désactiver le circuit de mesure lorsque la mesure de champ est acquise, et commander le circuit d'horloge et/ou le circuit de régulation de tension en fonction de la mesure de champ acquise, afin de diminuer une consommation électrique des circuits numériques lorsque la mesure de champ est inférieure à une valeur de seuil.

Selon un mode de réalisation, les circuits numériques comprennent un processeur qui est désactivé pendant l'acquisition de la mesure de champ.

Selon un mode de réalisation, les circuits numériques sont configurés pour détecter un signal de fin de trame dans le champ reçu par la bobine d'antenne, le signal de fin de trame étant l'événement à détecter pour déclencher une mesure de champ.

Selon un mode de réalisation, le circuit d'horloge est configuré pour générer plus de deux fréquences de signal d'horloge, en fonction d'un mot de commande, le microcircuit étant configuré pour déterminer le mot de commande du circuit d'horloge en fonction de la mesure de champ acquise, et pour fournir le mot de commande au circuit d'horloge.

Selon un mode de réalisation, le circuit de régulation de tension est configuré pour fournir une tension d'alimentation dépendant d'un mot de commande, le microcircuit étant configuré pour déterminer le mot de commande du circuit de régulation de tension en fonction de la mesure de champ acquise, et pour fournir le mot de commande au circuit de régulation de tension.

Selon un mode de réalisation, le circuit de mesure est configuré pour : prélever une première fraction d'un courant redressé issu de la bobine d'antenne, entre une sortie du courant redressé et une première borne de la bobine d'antenne, prélever une seconde fraction du courant redressé issu du circuit d'antenne, entre la sortie du courant redressé et une seconde borne de la bobine d'antenne, générer un courant de mesure en additionnant les première et seconde fractions de courant redressé, filtrer le courant de mesure, et convertir le courant filtré en une valeur numérique de mesure représentative de l'intensité du courant filtré.

Des exemples de réalisation de l'invention seront décrits dans ce qui suit, à titre non limitatif en relation avec les figures jointes parmi lesquelles :
la figure 1 représente schématiquement un microcircuit couplé à un terminal de lecture, selon un mode de réalisation,
la figure 2 représente un circuit de mesure du microcircuit, selon un mode de réalisation,
la figure 3 représente une courbe de variation d'une tension générée par le circuit de mesure en fonction de l'intensité du champ reçu par une bobine d'antenne connectée au microcircuit,
la figure 4 représente un circuit de contrôle du circuit de mesure, selon un mode de réalisation,
la figure 5 représente un diagramme d'état illustrant le fonctionnement du circuit de contrôle de mesure, selon un mode de réalisation,
la figure 6 représente un circuit de contrôle d'un circuit d'horloge du microcircuit, selon un mode de réalisation,
la figure 7 est un diagramme d'état illustrant le fonctionnement du circuit de contrôle du circuit de mesure, selon un autre mode de réalisation,
la figure 8 représente un diagramme temporel de signaux reçus et émis par le microcircuit,
les figures 9 à 12 représentent des circuits du microcircuit, selon d'autres modes de réalisation,

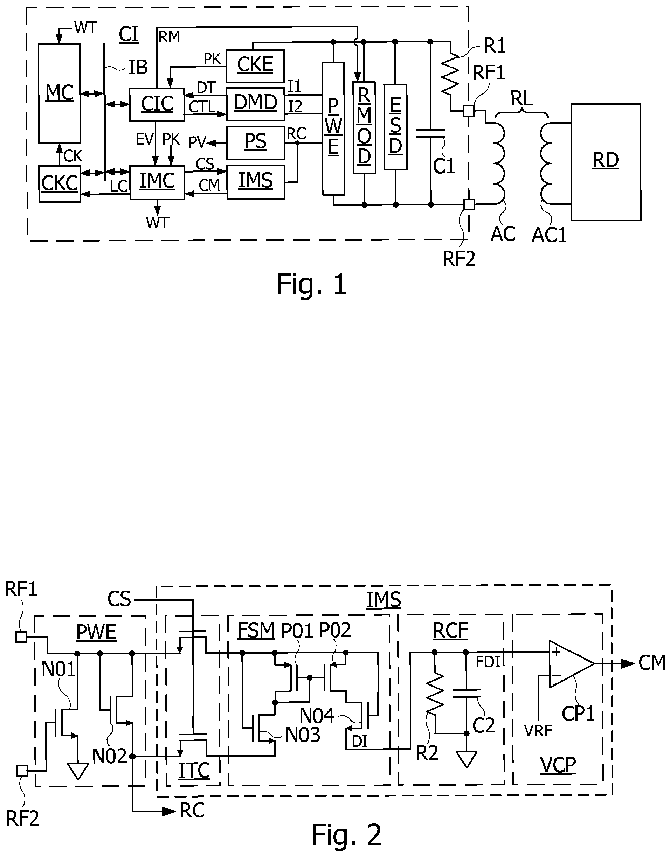

La figure 1 représente un terminal de lecture RD et un microcircuit CI, selon un mode de réalisation. Le microcircuit CI comprend deux bornes de connexion RF1, RF2 connectées à une bobine d'antenne AC qui peut être couplée à une bobine d'antenne AC1 du terminal RD. Le microcircuit CI comprend des circuits analogiques et des circuits numériques. Les circuits analogiques comprennent un circuit d'antenne comprenant une résistance R1 comportant une première borne connectée à la borne RF1 et une seconde borne reliée à la borne RF2 par l'intermédiaire d'un condensateur C1 d'accord du circuit d'antenne. Les circuits analogiques comprennent également un circuit de protection ESD contre les décharges électrostatiques, un circuit de rétro-modulation RMOD, un circuit d'alimentation primaire PWE et un circuit de démodulation DMD, connectés entre la seconde borne de la résistance R1 et la borne RF2. Les circuits analogiques comprennent également un circuit d'extraction de signal d'horloge CKE connecté à la seconde borne de la résistance R1, et un circuit de régulation de tension d'alimentation PS. Le circuit CKE extrait un signal d'horloge PK du champ électromagnétique modulé reçu par la bobine d'antenne AC. Dans le cas du standard ISO/IEC 14443, le signal d'horloge PK est à la fréquence 13,56 MHz. Le circuit de régulation PS reçoit une tension primaire d'alimentation RC du circuit PWE et fournit une tension d'alimentation PV aux circuits numériques du microcircuit CI. Le circuit DMD reçoit des signaux 11, 12 du circuit PWE, à partir desquels il extrait un signal de données DT reçu du terminal de lecture RD.

Les circuits numériques comprennent un processeur MC, par exemple de type microcontrôleur (incluant un ou plusieurs mémoires internes), un circuit de contrôle CIC de l'interface de communication, et un circuit d'horloge CKC fournissant un signal d'horloge CK au processeur MC. Le circuit de contrôle CIC reçoit le signal d'horloge PK extrait par le circuit CKE et le signal de donnée DT, et fournit notamment un signal RM de contrôle de rétro-modulation au circuit RMOD et un signal de contrôle CTL au circuit DMD. Les circuits numériques du microcircuit CI peuvent également comprendre une ou plusieurs mémoires (non représentées). Un bus interne IB connecte entre eux les différents circuits numériques (MC, CIC) du microcircuit CI.

Selon un mode de réalisation, les circuits analogiques du microcircuit CI comprennent un circuit de mesure IMS pour mesurer l'intensité du champ reçu par la bobine d'antenne AC, et les circuits numériques comprennent un circuit de contrôle IMC du circuit de mesure IMS, le circuit de contrôle IMC étant connecté au bus IB. Le circuit IMS est configuré pour exploiter le courant d'alimentation primaire RC fourni par le circuit PWE, et fournir un signal représentatif de l'intensité du champ reçu par la bobine d'antenne AC.

La figure 2 représente un exemple de réalisation du circuit de mesure IMS dans le cas où le circuit d'alimentation PWE comprend un circuit redresseur mono-alternance. Le circuit PWE comprend donc classiquement, un transistor MOS de type N N02 monté en diode (grille et drain connectés à la borne RF1 et source fournissant la tension primaire RC), entre la borne RF1 et la sortie fournissant la tension primaire RC, et un transistor MOS de type N N01 dont la grille est connectée à la borne RF2, le drain est connecté à la borne RF1 et la source est connectée à la masse.

Le circuit de mesure IMS comprend un circuit interrupteur ITC commandé par un signal CS, un circuit de mesure FSM de l'intensité du champ, un circuit de filtrage RCF et un circuit de comparaison VCP. Le circuit de mesure FSM est relié à la borne RF1 et reçoit le courant d'alimentation primaire RC par l'intermédiaire de transistors MOS du circuit ITC, utilisés comme interrupteurs commandés par le signal CS. Le circuit de mesure FSM comprend des transistors MOS de type P P01, P02 dont les sources sont reliées à la borne RF1 par l'intermédiaire du circuit ITC. Le circuit de mesure FSM comprend également des transistors MOS de type N N03, N04 dont les grilles sont reliées à la borne RF1 par l'intermédiaire du circuit ITC. La grille et le drain du transistor P01 sont connectés au drain du transistor N03 et à la grille du transistor P02. La source du transistor N03 reçoit la tension primaire RC par l'intermédiaire du circuit ITC. Le drain du transistor P02 est connecté au drain du transistor N04 dont la source fournit un courant de mesure DI représentatif de l'intensité du champ reçu par la bobine d'antenne AC. Les transistors P01, P02, N03 et N04 forment un miroir de courant de rapport 1/N permettant de prélever un signal de mesure DI représentant une fraction 1/N du courant primaire RC, et de fournir le signal de mesure DI au circuit de filtrage RCF. Selon un mode de réalisation, le rapport 1/N est compris entre 1/5 et 1/20, par exemple 1/12.

Le circuit de filtrage RCF comprend un filtre passe-bas réalisé à l'aide d'une résistance R2 montée en parallèle avec un condensateur C2, entre la source du transistor N04 et la masse. Dans le cas du standard ISO/IEC 14443, les valeurs de la résistance R2 et du condensateur C2 sont choisies pour obtenir une fréquence de coupure de l'ordre de 200 kHz, par exemple, afin d'éliminer la fréquence de la porteuse à 13,56 MHz du signal DI. Le circuit RCF fournit un signal de mesure filtré FDI au circuit de comparaison VCP. Le circuit de comparaison VCP comprend un comparateur CP1 comparant le signal de mesure filtré FDI à une tension de seuil VRF et fournissant un signal binaire CM à 0 ou à 1 selon que la tension du signal FDI est supérieure ou non à la tension de seuil VRF. La tension de seuil VRF peut être générée par microcircuit à partir d'une tension de référence de type "Bandgap" indépendante de la température du microcircuit CI.

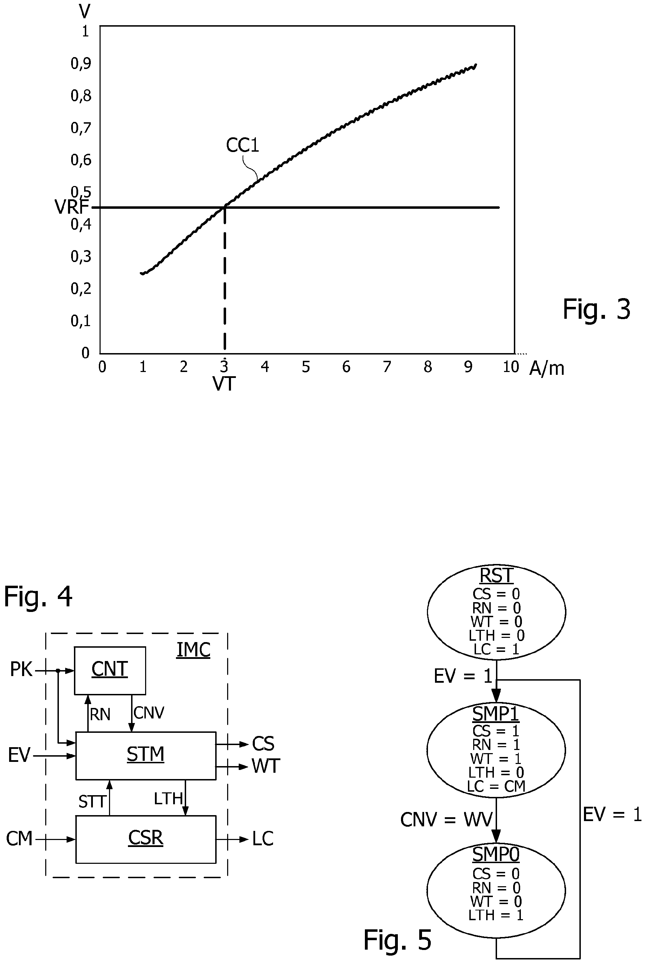

La figure 3 représente une courbe CC1 de variation du signal de mesure DI en fonction du champ reçu par la bobine d'antenne AC. Lorsque le champ reçu par la bobine d'antenne AC augmente de 1 à 9 A/m, la tension du signal DI augmente de 0,25 V à 0,9 V. Dans l'exemple de la figure 3, la valeur de seuil du champ reçu par la bobine d'antenne AC est fixée à environ 3 A/m, ce qui correspond à une tension d'environ 0,45 V. dans l'exemple de la figure 3, la tension de référence VRF est donc fixée à cette valeur 0.45 V. Il peut être prévu que la tension de référence puisse être fixée, par exemple par le processeur MC.

La figure 4 représente un exemple de réalisation du circuit de contrôle IMC. Dans cet exemple, le circuit de contrôle IMC comprend une machine d'état STM, un compteur CNT et un ou plusieurs registres de commande et d'état CSR. Le compteur CNT est cadencé par le signal d'horloge PK fourni par le circuit CKE. La machine d'état STM est configurée pour commander le compteur CNT et le circuit de mesure IMS, et en particulier pour les activer à l'arrivée d'un événement particulier, par exemple un front montant ou descendant dans un signal EV, fourni par exemple par le circuit de contrôle CIC. A cet effet, la machine d'état STM fournit des signaux de commande RN et CS, respectivement au compteur CNT et au circuit de mesure IMS. La machine d'état STM est également configurée pour commander le verrouillage du registre CSR à l'aide du signal LTH, et lire une commande STT dans le registre CSR.

La figure 5 représente un diagramme d'état illustrant le fonctionnement de la machine d'état STM. Dans un état initial RST, les signaux de sortie CS, RN et LTH de la machine d'état STM sont à 0. A la détection de l'événement EV, la machine d'état STM passe dans un état de mesure SMP1 dans lequel elle active le circuit de mesure IMS en passant le signal CS à 1, et elle active le compteur CNT en passant le signal RN à 1, le signal LTH restant à 0. A la fin du comptage, lorsque la valeur CNV du compteur atteint une valeur attendue WV, la machine d'état STM passe dans un état de fin de mesure SMP0 dans lequel elle désactive le circuit de mesure IMS (CS=0) et le compteur CNT (RN=0), et verrouille le registre CSR (LTH=1), de sorte que le signal binaire de mesure CM fournie par le circuit de mesure IMS et chargée dans le registre CSR ne peut pas être modifiée par une nouvelle valeur du signal binaire de mesure. La valeur de compteur VW correspond au temps nécessaire au circuit de mesure IMS pour effectuer une mesure de courant. La valeur de mesure LC chargée dans le registre CSR est fournie au circuit d'horloge CKC qui commande la fréquence du signal d'horloge CK fourni au processeur MC. La valeur de mesure LC reste inchangée jusqu'à ce que la machine d'état STM repasse dans l'état de mesure SMP1. Si dans l'état SMP0, l'événement se produit à nouveau (signal EV = 1), la machine d'état STM repasse dans l'état de mesure SMP1 pour effectuer une nouvelle mesure de champ conduisant à une mise à jour éventuelle de la valeur de mesure LC mémorisée dans le registre CSR.

Ainsi, le circuit de mesure IMS est actif et donc consomme de l'énergie, uniquement lorsqu'il doit effectuer une mesure de champ.

Selon un mode de réalisation, la machine d'état STM peut également être configurée fournir un signal WT permettant de bloquer le processeur MC (WT=1) pendant qu'une mesure est acquise durant l'état SMP1 (lorsque le signal de commande CS est à 1). De cette manière, on évite que le circuit de mesure IMS et le processeur MC soient actifs en même temps, ce qui limite la consommation électrique instantanée du microcircuit CI.

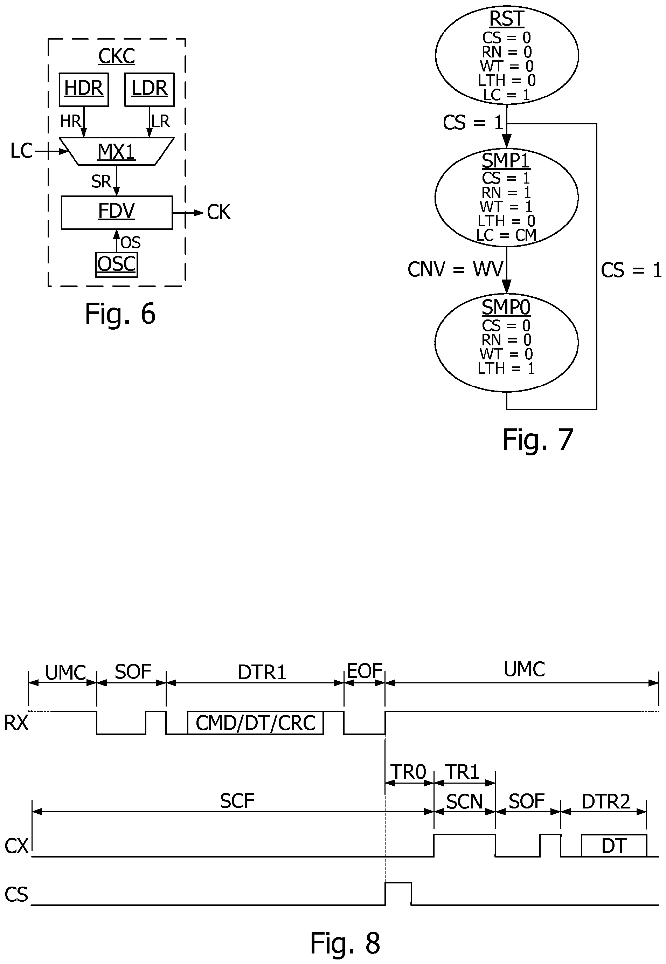

La figure 6 représente un exemple de réalisation du circuit d'horloge CKC. Le circuit d'horloge CKC comprend un oscillateur OSC fournissant un signal d'horloge primaire OS à un circuit diviseur de fréquence FDV, un multiplexeur MX1 et deux registres HDR et LDR mémorisant respectivement des rapports de division haute fréquence HR et basse fréquence LR. Le multiplexeur MX1 est commandé par la valeur binaire LC de mesure stockée dans le registre CSR, pour sélectionner l'un ou l'autre des rapports de division HR, LR à transmettre au circuit diviseur FDV. Le circuit FDV applique le rapport de division sélectionné au signal d'horloge OS et fournit le signal d'horloge CK produit au processeur MC.

Ainsi, si le microcircuit CI est à une distance réduite du terminal RD de sorte que l'intensité du champ reçu par la bobine d'antenne AC est supérieure à la valeur de seuil VT (LC = 1), le signal d'horloge CK fourni au processeur MC peut présenter une fréquence maximum correspondant au rapport de division HR. Inversement, si l'intensité du champ reçu par la bobine d'antenne AC est inférieure à la valeur de seuil VT (LC = 0), le signal d'horloge CK fourni au processeur MC peut présenter une fréquence minimum correspondant au rapport de division LR. De cette manière, lorsque l'intensité du champ reçu par la bobine d'antenne AC est inférieure à la valeur de seuil VT, le processeur MC est cadencé à une fréquence plus lente, et donc consomme moins d'énergie. Cette disposition permet maintenir opérationnel le circuit d'alimentation PS, et donc le microcircuit CI, à une plus grande distance (par exemple environ 4 à 5 cm) du terminal de lecture RD, tout en autorisant une transaction rapide entre le terminal de lecture et le microcircuit lorsque ces derniers sont plus proche l'un de l'autre (par exemple à une distance inférieure à 1cm).

Selon un mode de réalisation, la valeur de la mesure LC dans le registre CSR est forcée à 1 au démarrage du microcircuit CI (état RST sur la figure 5), de sorte que le processeur MC fonctionne à sa vitesse maximale, jusqu'à ce qu'une première mesure CM soit acquise et qu'une mesure LC soit stockée dans le registre CSR. A l'acquisition de cette première mesure, le signal d'horloge CK peut être modifié si le champ mesuré est inférieur à la valeur de seuil VT.

La figure 7 représente un diagramme d'état illustrant le fonctionnement de la machine d'état STM, selon un autre mode de réalisation. Le diagramme d'état de la figure 7 diffère de celui de la figure 5 en ce que le processeur MC contrôle l'activation du circuit IMS en modifiant la valeur du signal CS par l'intermédiaire du registre CSR où cette valeur est mémorisée, ou bien en fournissant le signal EV au circuit CIC. Le diagramme d'état de la figure 7 comporte les états RST, SMP0 et SMP1. Le passage de la machine d'état STM de l'état RST à l'état SMP1 est déclenché par le passage du signal CS de 0 à 1. De même, dans l'état SMP0, le processeur MC peut déclencher le passage à l'état SMP1 pour effectuer une nouvelle mesure, en forçant le signal CS à 1. Ainsi, le processeur MC peut déclencher à tout moment une nouvelle mesure par le circuit de mesure IMS, ce qui permet de prendre en compte une variation du champ reçu par le microcircuit CI durant une transaction entre le microcircuit et le terminal RD. Le processeur MC peut ainsi déclencher une mesure de champ à un moment où le besoin en énergie du circuit CI est minimum.

Dans l'exemple de la figure 7, la machine d'état STM peut également être configurée pour fournir le signal WT permettant de bloquer le processeur MC (WT=1) juste pendant qu'une mesure est acquise, c'est-à-dire tant que la machine d'état STM se trouve dans l'état SMP1.

La figure 8 représente une séquence de transmission de signaux RX, CX émis respectivement par le terminal de lecture RD et le microcircuit CI, conformément au standard ISO/IEC 14443. Lorsqu'il est actif, le terminal RD émet en permanence une porteuse non modulée UMC. Périodiquement, le terminal RD émet, en modulant la porteuse, un signal de début de trame SOF, puis une trame DTR1, et enfin un signal de fin de trame EOF. La trame DTR1 peut comprendre une commande CMD, des données DT et une somme de contrôle CRC. Lorsque le microcircuit CI se trouve dans le champ d'un terminal de lecture et donc reçoit un signal de porteuse, modulée ou non, il s'active sous l'effet de l'apparition de la tension d'alimentation primaire RC. Une fois alimenté, il reçoit le signal RX émis par le terminal RD, le signal RX comportant la trame de données DTR1 et le signal de fin de trame EOF. A la suite de la détection du signal EOF, le microcircuit CI déclenche une temporisation TR0, à la fin de laquelle il émet une sous-porteuse non modulée SCN en modulant le champ émis par le terminal RD (par rétro-modulation), pendant un temps TR1. Ensuite, le microcircuit CI émet, en modulant la sous-porteuse, un signal de début de trame SOF, puis une trame DTR2. A l'issue de la transmission de la trame DTR2, et d'un signal de fin de trame (non représenté), le microcircuit CI suspend l'émission de la sous-porteuse.

Selon un mode de réalisation, le circuit de contrôle CIC est configuré pour détecter un événement dans le signal reçu du terminal RD, et pour signaler cet événement (EV=1) au circuit IMC, afin d'activer le circuit de mesure IMS à l'aide du signal d'activation CS. Selon un mode de réalisation, cet événement est le signal de fin de trame EOF émis par le terminal RD. Sur la figure 8, le signal CS est activé (passe de 0 à 1) à la fin de la réception du signal EOF émis par le terminal RD, le signal CS restant activé uniquement pendant le temps d'acquisition de la mesure de champ CM. Il est à noter que la fin de la réception du signal EOF reçu par le microcircuit CI correspond à un temps d'attente (temporisation TR0) pendant lequel le processeur MC n'a pas d'opération particulière à réaliser dans le cadre de la transaction conduite avec le terminal RD. Pendant ce temps, le processeur MC peut donc être bloqué à condition de pouvoir être actif la fin de la temporisation TR0. Il peut être noté également que le temps d'acquisition d'une mesure de champ (temps pendant lequel le signal CS est à 1) peut être inférieur à la durée de la temporisation TR0. Le temps d'attente pendant la temporisation TR0 peut donc être exploité pour effectuer une mesure de champ, tout en bloquant le processeur MC.

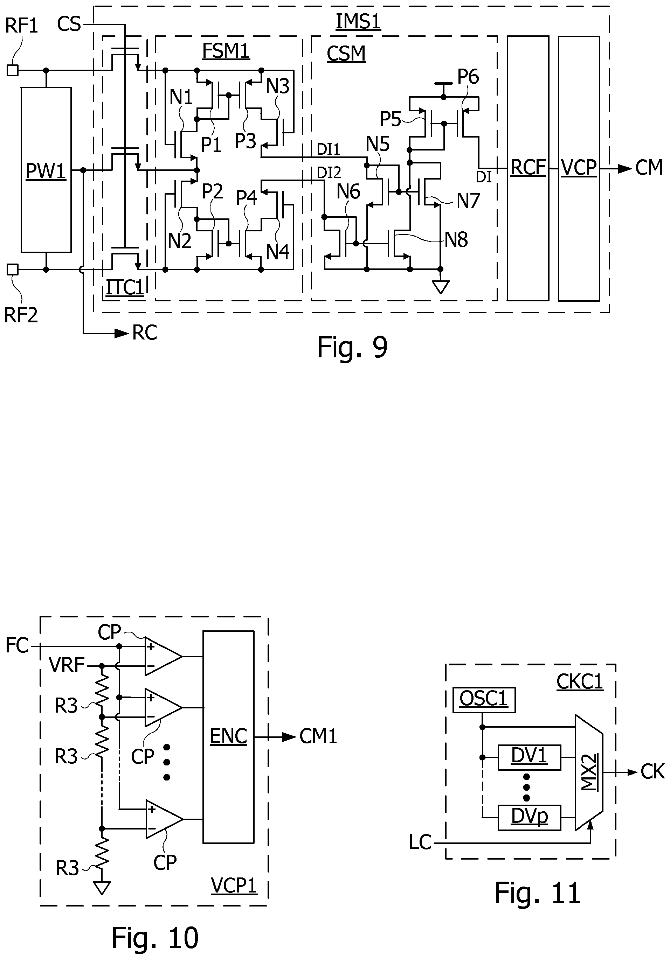

La figure 9 représente le circuit de mesure, selon un autre mode de réalisation. Le circuit de mesure IMS1 représenté sur la figure 9 est adapté à un circuit d'alimentation PW1 comportant un circuit redresseur double alternance. Le circuit de mesure IMS1 comprend un circuit interrupteur ITC1 commandé par le signal CS, un circuit de mesure FSM1 de l'intensité du champ, un circuit d'addition de courant CSM, le circuit de filtrage RCF et le circuit de comparaison VCP. Le circuit de mesure FSM1 est relié aux bornes RF1, RF2, et reçoit le courant d'alimentation primaire RC du circuit PW1 par l'intermédiaire de transistors MOS du circuit ITC1, utilisés comme interrupteurs commandés par le signal CS.

Le circuit FSM1 comprend des transistors MOS de type N N1, N2, N3 et N4, et des transistors MOS de type P P1, P2, P3 et P4. La borne RF1 est reliée aux grilles des transistors N1 et N3, et aux sources des transistors P1 et P3, par l'intermédiaire d'un transistor du circuit ITC1. La borne RF2 est reliée aux grilles des transistors N2 et N4, et aux sources des transistors P2 et P4, par l'intermédiaire d'un transistor du circuit ITC1. Les sources des transistors N1, N2 sont reliées à la sortie RC du circuit PW1, par l'intermédiaire d'un transistor du circuit ITC1. La grille du transistor P1 est connectée à la grille du transistor P3 et aux drains des transistors P1 et N1. La grille du transistor P2 est connectée à la grille du transistor P4 et aux drains des transistors P2 et N2. Le drain du transistor P3 est connecté au drain du transistor N3 dont la source fournit un signal DI1 au circuit CSM. Le drain du transistor P4 est connecté au drain du transistor N4 dont la source fournit un signal DI2 au circuit CSM.

Les transistors N1, N3, P1, P3 forment un premier miroir de courant de rapport 1/N permettant de prélever une fraction DI1 représentant le rapport 1/N du courant primaire RC et de la fournir au circuit CSM. Les transistors N2, N4, P2, P4 forment un second miroir de courant de rapport 1/N permettant de prélever une fraction DI2 représentant le rapport 1/N du courant primaire RC et de la fournir au circuit CSM. Selon un mode de réalisation, le rapport 1/N est compris entre 1/5 et 1/20, par exemple 1/12. Les signaux Di1 et DI2 présentent une même amplitude, mais sont en opposition de phase.

Le circuit CSM comprend des transistors MOS de type N N5, N6, N7 et N8, et des transistors MOS de type P P5 et P6. Le drain du transistor N5, et les grilles des transistors N5 et N7 reçoivent le signal DI1. Le drain du transistor N6, et les grilles des transistors N6 et N8 reçoivent le signal DI2. Les sources des transistors N5, N6, N7 et N8 sont connectées à la masse. Les drains des transistors N7 et N8 sont connectées au drain du transistor P5 et aux grilles des transistors P5 et P6. Les sources des transistors P5 et P6 reçoivent la tension d'alimentation PV. Le drain du transistor P6 fournit le signal de mesure DI au circuit de filtrage RCF. Le circuit CSM permet d'additionner les signaux DI1 et DI2 en un signal résultant DI formant le signal de mesure du champ reçu par la bobine d'antenne AC.

Selon un mode de réalisation, le circuit de comparaison VCP est remplacé par un circuit convertisseur analogique/numérique. La figure 10 représente un exemple de circuit convertisseur analogique/numérique VCP1. Le circuit VCP1 est configuré pour comparer le signal filtré FC issu du circuit de filtrage RCF à plusieurs tensions de seuil. A cet effet, le circuit VCP1 comprend plusieurs comparateurs CP recevant le signal FC sur une entrée directe, une entrée inverseuse de chaque comparateur recevant la tension de référence VRF au travers d'une ou plusieurs résistances R3 en série. Les sorties respectives des comparateurs CP fournissent des signaux binaires à un encodeur ENC configuré pour fournir un mot binaire de plusieurs bits représentant une valeur de mesure numérique CM1 correspondant au nombre de sorties à un des comparateurs CP. Si N est le nombre de bits du mot de mesure CM1, le circuit VCP1 comprend 2^{N}-1 comparateurs CP et 2^{N} résistances R3. Le circuit VCP1 forme ainsi un convertisseur analogique/numérique à N bits avec une résolution égale à VRF/2^{N}.

La figure 11 représente un exemple de réalisation du circuit d'horloge adapté au circuit de comparaison VCP1 de la figure 10. Le circuit d'horloge CKC1 représenté sur la figure 11 comprend un oscillateur OSC1 fournissant un signal d'horloge primaire OS à un multiplexeur MX2 et à p circuits diviseurs de fréquence DV1, ..., DVp ayant des rapports de division croissants de DV1 à DVp. Les sorties respectives des diviseurs DV1-DVp sont connectées à des entrées respectives du multiplexeur MX2 dont la sortie fournit le signal d'horloge au processeur MC. Le multiplexeur MX2 est commandé par une valeur numérique de mesure LC1 stockée dans le registre CSR correspondant au mot de mesure CM1, pour sélectionner l'un ou l'autre des signaux d'horloge en sortie de l'oscillateur OSC1 ou des diviseurs DV1-DVp, à transmettre en sortie du circuit CKC1 au processeur MC. Si le mot de mesure LC1 (ou CM1 à la fin de la temporisation définie par le compteur CNT) comporte N bits, le multiplexeur MX2 comporte 2^{N} entrées, et le circuit CKC1 comporte 2^{N}-1 (= p) diviseurs de fréquence.

Les circuits VCP1 et CKC1 permettent ainsi d'ajuster finement la fréquence d'horloge CK du processeur MC et donc sa consommation électrique en fonction de l'intensité du champ reçu par le microcircuit CI, et donc en fonction de l'énergie disponible.

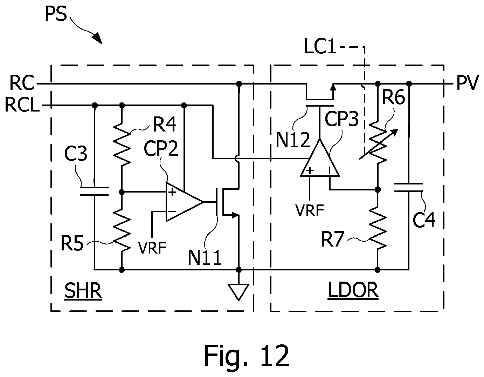

Selon un autre mode de réalisation, la fréquence du signal d'horloge CK est fixe, et la tension d'alimentation PV du processeur MC est ajustée en fonction du signal LC ou LC1. Ainsi, la figure 12 représente un exemple de réalisation PS1 du circuit d'alimentation PS fournissant une tension d'alimentation PV régulée et ajustée. Le circuit PS1 comprend un circuit limiteur de tension SHR et un circuit de régulation LDOR à faible chute de tension. Le circuit SHR comprend un comparateur CP2 comportant une entrée directe reliée par l'intermédiaire d'une résistance R4 à une entrée de tension d'alimentation RCL fournie par le circuit PWE ou PW1 pour les circuits analogiques du microcircuit CI. L'entrée directe du comparateur CP2 est également reliée à la masse par l'intermédiaire d'une résistance R5. Le comparateur CP2 est alimenté par la tension RCL et comprend également une entrée inverseuse recevant la tension de référence VRF. Le circuit SHR comprend également un condensateur C3 reliant l'entrée de tension d'alimentation RCL à la masse. La sortie du comparateur CP2 est connectée à la grille d'un transistor MOS de type N N11 dont le drain reçoit la tension d'alimentation primaire RC et dont la source est connectée à la masse. Le circuit SHR permet de forcer la tension du courant primaire RC fourni par le circuit PW1 à une valeur (par exemple 3 V) requise par les circuits numériques du microcircuit CI et de limiter le courant RC à la valeur requise par les circuits numériques.

Le circuit de régulation LDOR comprend un comparateur CP3 alimenté par la tension d'alimentation RCL, dont l'entrée directe reçoit la tension de référence VRF. L'entrée inverseuse du comparateur CP3 est reliée à la masse par l'intermédiaire d'une résistance R7, et à la sortie PV du circuit PS1 par l'intermédiaire d'une résistance variable R6 commandée par pas par la valeur numérique de mesure LC1 mémorisée dans le registre CSR. La sortie du comparateur CP3 est connectée à la grille d'un transistor MOS de type N dont le drain reçoit la tension d'alimentation primaire RC et la source est connectée à la sortie de tension d'alimentation PV du circuit d'alimentation PS1. Le circuit LDOR comprend également un condensateur C4 connecté entre la masse et la sortie PV du circuit PS1.

Selon un autre mode de réalisation, la mesure de champ LC ou LC1 mémorisée dans le registre CSR est utilisée pour sélectionner un point de fonctionnement du processeur MC, parmi plusieurs points de fonctionnement, chaque point de fonctionnement étant défini par une commande du circuit CKC ou CKC1 associée à une commande d'ajustement de la tension d'alimentation PV, appliquée à la résistance R6 dans le circuit d'alimentation PS1. Par exemple, les points de fonctionnement définis par les valeurs associées des commandes du circuit CKC ou CKC1 et de la résistance variable R6 peuvent être stockés dans une table indexée par les valeurs possibles de la mesure de champ LC ou LC1 stockée dans le registre CSR.

Il apparaîtra clairement à l'homme de l'art que la présente invention est susceptible de diverses variantes de réalisation et diverses applications. En particulier, l'invention n'est pas limitée à des mesures de courant pour obtenir une mesure représentative du champ reçu par la bobine d'antenne AC. En effet, cette mesure de champ peut être obtenue par une mesure de tension dans le circuit d'alimentation primaire PWE, PW1.

De plus, d'autres circuits que ceux décrits (Figures 6 et 11) peuvent aisément être imaginés pour ajuster la fréquence d'horloge fournie au processeur MP.

L'invention n'est pas non plus limitée au protocole de communication spécifié dans le standard ISO/IEC 14443, mais peut s'appliquer à d'autres protocoles de communication entre un microcircuit sans contact et un terminal de lecture. Il en résulte que d'autres événements que ceux décrits peuvent déclencher une mesure de champ dans le microcircuit. En outre, l'événement à détecter déclenchant une mesure de champ n'est pas nécessairement liée à un instant particulier dans le protocole de communication entre le microcircuit et le terminal de lecture. Il importe simplement que la mesure du champ soit effectuée à un moment risquant le moins de perturber la réception et le traitement du signal reçu par le microcircuit, en particulier lorsque l'intensité du champ reçu est proche de la limite en dessous de laquelle l'énergie collectée par le circuit d'alimentation PWE, PW1 est insuffisante pour alimenter le microcircuit.

## Revendications

1. Procédé de gestion de l'alimentation dans un microcircuit sans contact, le procédé comprenant des étapes consistant à :
recevoir un champ électromagnétique variable par l'intermédiaire d'une bobine d'antenne (AC) du microcircuit sans contact (CI),
extraire du champ reçu un courant d'alimentation (RC, RCL) du microcircuit sans contact,
déclencher dans le microcircuit sans contact un circuit de mesure (IMS) pour mesurer une intensité du champ reçu, et acquérir une mesure du champ (LC) à l'aide du circuit de mesure, et désactiver le circuit de mesure lorsque la mesure de champ est acquise, et
commander un circuit d'horloge (CKC, CKC1) et/ou un circuit d'alimentation régulé (PS, PS1) du microcircuit sans contact, couplés à des circuits numériques (MC) du microcircuit sans contact, en fonction de la mesure de champ acquise, afin de diminuer une consommation électrique des circuits numériques lorsque la mesure de champ est inférieure à une valeur de seuil (VT).

2. Procédé selon la revendication 1, dans lequel les circuits numériques (MC) sont au moins en partie désactivés pendant l'acquisition de la mesure de champ (LC).

3. Procédé selon la revendication 1 ou 2, dans lequel le déclenchement du circuit de mesure (IMS) est effectué à la suite de la détection d'un événement (EV, EOF) dans un signal reçu par la bobine d'antenne (AC).

4. Procédé selon la revendication 3, dans lequel l'événement (EV) est un signal de fin de trame (EOF) apparaissant dans le signal reçu par la bobine d'antenne (AC) du microcircuit (CI), le signal de fin de trame étant conforme au standard ISO/IEC 14443.

5. Procédé selon la revendication 1 ou 2, dans lequel le déclenchement du circuit de mesure (IMS) est effectué à la suite de la détection d'un événement (EV) par un processeur (MC) des circuits numériques, le processeur commandant l'activation du circuit de mesure (IMS) à la suite de la détection de l'événement.

6. Procédé selon l'une des revendications 1 à 5, dans lequel le circuit de mesure (IMS) est déclenché plusieurs fois durant une session de communication sans contact entre le microcircuit sans contact (CI) et un terminal de lecture (RD).

7. Procédé selon l'une des revendications 1 à 6, dans lequel la mesure de champ acquise (LC1) est un mot de plusieurs bits, le procédé comprenant la sélection d'un point de fonctionnement des circuits numériques (MC) parmi plusieurs points de fonctionnement définis chacun par une valeur de commande du circuit d'horloge (CKC1) associée à une valeur de commande du circuit d'alimentation (PS1).

8. Procédé selon l'une des revendications 1 à 7, dans lequel l'acquisition d'une mesure de champ comprend des étapes consistant à :
prélever une première fraction d'un premier (DI1) courant redressé entre une sortie du courant redressé (RC) issu de la bobine d'antenne (AC) et une première borne (RF1) de la bobine d'antenne,
prélever une seconde fraction (DI2) du courant redressé, entre la sortie du courant redressé issu de la bobine d'antenne et une seconde borne (RF2) de la bobine d'antenne,
générer un courant de mesure (DI) en additionnant les première et seconde fractions de courant redressé,
filtrer le courant de mesure, et
convertir le courant filtré (FDI) en une valeur numérique de mesure (CM1) représentative de l'intensité du courant filtré.

9. Microcircuit sans contact comprenant :
une bobine d'antenne (AC) pour recevoir et émettre des signaux d'une communication sans contact au moyen d'un champ électromagnétique modulé,
un circuit d'alimentation primaire (PWE) pour extraire de la bobine d'antenne un courant d'alimentation (RC) apparaissant lorsque la bobine d'antenne est placée dans un champ électromagnétique variable,
un circuit de mesure de champ (IMS) configuré pour mesurer une intensité du champ reçu par la bobine d'antenne,
un circuit d'horloge (CKC, CKC1) et un circuit de régulation de tension (PS, PS1), et
des circuits numériques (MC, IMC, CIC) configurés pour détecter un événement (EV) dans le microcircuit sans contact (CI), et lors de la détection de l'événement :
déclencher le circuit de mesure pour mesurer une intensité du champ reçu,
acquérir une mesure du champ (LC) à l'aide du circuit de mesure,
désactiver le circuit de mesure lorsque la mesure de champ est acquise, et
commander le circuit d'horloge et/ou le circuit de régulation de tension en fonction de la mesure de champ acquise, afin de diminuer une consommation électrique des circuits numériques lorsque la mesure de champ est inférieure à une valeur de seuil (VT).

10. Microcircuit selon la revendication 9, dans lequel les circuits numériques comprennent un processeur (MC) qui est désactivé pendant l'acquisition de la mesure de champ.

11. Microcircuit selon la revendication 9 ou 10, dans lequel les circuits numériques (CIC, IMC, MC) sont configurés pour détecter un signal de fin de trame (EOF) dans le champ reçu par la bobine d'antenne (AC), le signal de fin de trame étant l'événement à détecter (EV) pour déclencher une mesure de champ.

12. Microcircuit selon l'une des revendications 9 à 11, dans lequel le circuit d'horloge (CKC1) est configuré pour générer plus de deux fréquences de signal d'horloge, en fonction d'un mot de commande (LC1), le microcircuit (CI) étant configuré pour déterminer le mot de commande du circuit d'horloge en fonction de la mesure de champ acquise, et pour fournir le mot de commande au circuit d'horloge.

13. Microcircuit selon l'une des revendications 9 à 12, dans lequel le circuit de régulation de tension (PS1) est configuré pour fournir une tension d'alimentation (PV) dépendant d'un mot de commande (LC1), le microcircuit (CI) étant configuré pour déterminer le mot de commande du circuit de régulation de tension en fonction de la mesure de champ acquise (CM1), et pour fournir le mot de commande au circuit de régulation de tension.

14. Microcircuit selon l'une des revendications 9 à 13, dans lequel le circuit de mesure est configuré pour :
prélever une première fraction (DI1) d'un courant redressé issu de la bobine d'antenne (AC), entre une sortie du courant redressé (RC) et une première borne (RF1) de la bobine d'antenne,
prélever une seconde fraction (DI2) du courant redressé issu du circuit d'antenne (AC), entre la sortie du courant redressé et une seconde borne (RF2) de la bobine d'antenne,
générer un courant de mesure (DI) en additionnant les première et seconde fractions de courant redressé,
filtrer le courant de mesure, et
convertir le courant filtré (FDI) en une valeur numérique de mesure (CM1) représentative de l'intensité du courant filtré.

## Patentansprüche

1. Verfahren für eine Einspeisungsverwaltung in einer kontaktlosen Mikroschaltung, wobei das Verfahren die folgenden Schritte umfasst:
Empfangen eines variablen elektromagnetischen Felds durch eine Antennenspule (AC) der kontaktlosen Mikroschaltung (CI),
Extrahieren eines Speisestroms (RC, RCL) der kontaktlosen Mikroschaltung aus dem empfangenen Feld,
Auslösen einer Messschaltung (IMS) in der kontaktlosen Mikroschaltung zum Messen einer Stärke des empfangenen Felds und Erfassen einer Feldmessung (LC) mit Hilfe der Messschaltung und Deaktivieren der Messschaltung, wenn die Feldmessung erfasst wird, und
Steuern einer Taktschaltung (CKC, CKC1) und/oder einer geregelten Speiseschaltung (PS, PS1) der kontaktlosen Mikroschaltung, die mit Digitalschaltungen (MC) der kontaktlosen Mikroschaltung gekoppelt sind, als Funktion der erfassten Feldmessung, um einen Leistungsverbrauch der Digitalschaltungen zu reduzieren, wenn die Feldmessung kleiner als ein Schwellenwert (VT) ist.

2. Verfahren nach Anspruch 1, wobei die Digitalschaltungen (MC) während des Erfassens der Feldmessung (LC) wenigstens teilweise deaktiviert sind.

3. Verfahren nach Anspruch 1 oder 2, wobei das Auslösen der Messschaltung (IMS) nach dem Erkennen eines Ereignisses (EV, EOF) in einem Signal erfolgt, das durch die Antennenspule (AC) empfangen wird.

4. Verfahren nach Anspruch 3, wobei das Ereignis (EV) ein Rahmenendesignal (EOF) ist, das in dem Signal auftritt, das durch die Antennenspule (AC) der Mikroschaltung (CI) empfangen wird, wobei das Rahmenendesignal einem ISO/IEC 14443-Standard entspricht.

5. Verfahren nach Anspruch 1 oder 2, wobei das Auslösen der Messschaltung (IMS) nach dem Erkennen eines Ereignisses (EV) durch einen Prozessor (MC) der Digitalschaltungen erfolgt, wobei der Prozessor das Aktivieren der Messschaltung (IMS) nach dem Erkennen des Ereignisses steuert.

6. Verfahren nach einem der Ansprüche 1 bis 5, wobei die Messschaltung (IMS) während einer kontaktlosen Kommunikationssitzung zwischen der kontaktlosen Mikroschaltung (CI) und einem Leseendgerät (RD) mehrmals ausgelöst wird.

7. Verfahren nach einem der Ansprüche 1 bis 6, wobei die erfasste Feldmessung (LC1) ein Wort mit mehreren Bits ist, wobei das Verfahren das Auswählen eines Betriebspunkts der Digitalschaltungen (MC) aus mehreren Betriebspunkten umfasst, die jeweils durch einen Taktschaltungssteuerwert (CKC1) definiert sind, der mit einem Speiseschaltungssteuerwert (PS1) verknüpft ist.

8. Verfahren nach einem der Ansprüche 1 bis 7, wobei das Erfassen einer Feldmessung Schritte umfasst, die aus Folgendem bestehen:
Entnehmen eines ersten Anteils eines ersten (DI1) gleichgerichteten Stroms zwischen einem Ausgang des gleichgerichteten Stroms (RC) aus der Antennenspule (AC), und einem ersten Anschluss (RF1) der Antennenspule,
Entnehmen eines zweiten Anteils (DI2) des gleichgerichteten Stroms zwischen dem Ausgang des gleichgerichteten Stroms aus der Antennenspule und einem zweiten Anschluss (RF2) der Antennenspule,
Erzeugen eines Messstroms (DI) durch Addieren des ersten und des zweiten Anteils eines gleichgerichteten Stroms,
Filtern des Messstroms und
Umwandeln des gefilterten Stroms (FDI) in einen digitalen Messwert (CM1), der die Stärke des gefilterten Stroms darstellt.

9. Kontaktlose Mikroschaltung, die Folgendes umfasst:
eine Antennenspule (AC) zum Empfangen und Senden von Signalen einer kontaktlosen Kommunikation mittels eines modulierten elektromagnetischen Felds,
eine primäre Speiseschaltung (PWE) zum Extrahieren eines Speisestroms (RC) aus der Antennenspule, der auftritt, wenn die Antennenspule in einem variablen elektromagnetischen Feld platziert wird,
eine Feldmessungsschaltung (IMS), die zum Messen einer Stärke des Felds konfiguriert ist, das durch die Antennenspule empfangen wird,
eine Taktschaltung (CKC, CKC1) und eine Spannungsregelungsschaltung (PS, PS1), und
Digitalschaltungen (MC, IMC, CIC), die für Folgendes konfiguriert sind: Erkennen eines Ereignisses (EV) in der kontaktlosen Mikroschaltung (CI), und während des Erkennens des Ereignisses:
Auslösen der Messschaltung zum Messen einer Stärke des empfangenen Felds,
Erfassen einer Messung des Felds (LC) mit Hilfe der Messschaltung,
Deaktivieren der Messschaltung, wenn die Feldmessung erfasst wird, und
Steuern der Taktschaltung und/oder der Spannungsregelungsschaltung als Funktion der erfassten Feldmessung, um einen Leistungsverbrauch der Digitalschaltungen zu reduzieren, wenn die Feldmessung kleiner als ein Schwellenwert (VT) ist.

10. Mikroschaltung nach Anspruch 9, wobei die Digitalschaltungen einen Prozessor (MC) umfassen, der während des Erfassens der Feldmessung deaktiviert ist.

11. Mikroschaltung nach Anspruch 9 oder 10, wobei die Digitalschaltungen (CIC, IMC, MC) zum Erkennen eines Rahmenendesignals (EOF) in dem Feld konfiguriert sind, das durch die Antennenspule (AC) empfangen wird, wobei das Rahmenendesignal das zu erkennende Ereignis (EV) zum Auslösen einer Feldmessung ist.

12. Mikroschaltung nach einem der Ansprüche 9 bis 11, wobei die Taktschaltung (CKC1) zum Erzeugen von mehr als zwei Taktsignalfrequenzen als Funktion von einem Steuerwort (LC1) konfiguriert ist, wobei die Mikroschaltung (CI) zum Bestimmen des Steuerworts der Taktschaltung als Funktion der erfassten Feldmessung und zum Bereitstellen des Steuerworts an die Taktschaltung konfiguriert ist.

13. Mikroschaltung nach einem der Ansprüche 9 bis 12, wobei die Spannungsregelungsschaltung (PS1) zum Bereitstellen einer Speisespannung (PV) konfiguriert ist, die von einem Steuerwort (LC1) abhängig ist, wobei die Mikroschaltung (CI) zum Bestimmen des Steuerworts der Spannungsregelungsschaltung als Funktion der erfassten Feldmessung (CM1) und zum Bereitstellen des Steuerworts an die Spannungsregelungsschaltung konfiguriert ist.

14. Mikroschaltung nach einem der Ansprüche 9 bis 13, wobei die Messschaltung für Folgendes konfiguriert ist:
Entnehmen eines ersten Anteils (DI1) eines gleichgerichteten Stroms aus der Antennenspule (AC) zwischen einem Ausgang des gleichgerichteten Stroms (RC) und einem ersten Anschluss (RF1) der Antennenspule,
Entnehmen eines zweiten Anteils (DI2) des gleichgerichteten Stroms aus der Antennenschaltung (AC) zwischen dem Ausgang des gleichgerichteten Stroms und einem zweiten Anschluss (RF2) der Antennenspule,
Erzeugen eines Messstroms (DI) durch Addieren des ersten und des zweiten Anteils eines gleichgerichteten Stroms,
Filtern des Messstroms und
Umwandeln des gefilterten Stroms (FDI) in einen digitalen Messwert (CM1), der die Stärke des gefilterten Stroms darstellt.

## Claims

1. A method of power management in a contactless microcircuit, the method comprising the steps of:
receiving a variable electromagnetic field via an antenna coil (AC) of the contactless microcircuit (IC),
extracting a supply current (RC, RCL) for the contactless microcircuit from the received field,
triggering a measurement circuit (IMS) in the contactless microcircuit to measure a received field strength, and acquiring a field measurement (LC) using the measurement circuit, and deactivating the measurement circuit when the field measurement is acquired, and
controlling a clock circuit (CKC, CKC1) and/or a regulated power supply circuit (PS, PS1) of the contactless microcircuit, coupled to digital circuits (MC) of the contactless microcircuit, as a function of the acquired field measurement, to reduce a power consumption of the digital circuits when the field measurement is below a threshold value (VT).

2. The method according to claim 1, wherein the digital circuits (MC) are at least partially disabled during the acquisition of the field strength measurement (LC).

3. The method according to claim 1 or 2, wherein the triggering of the measurement circuit (IMS) is performed following the detection of an event (EV, EOF) in a signal received by the antenna coil (AC).

4. The method of claim 3, wherein the event (EV) is an end of frame signal (EOF) appearing in the signal received by the antenna coil (AC) of the microcircuit (CI), the end of frame signal complying with the ISO/IEC 14443 standard.

5. The method according to claim 1 or 2, wherein the triggering of the measurement circuit (IMS) is performed following the detection of an event (EV) by a processor (MC) of the digital circuits, the processor controlling the activation of the measurement circuit (IMS) following the detection of the event.

6. The method according to any of claims 1 to 5, wherein the measurement circuit (IMS) is triggered several times during a contactless communication session between the contactless microcircuit (CI) and a reader terminal (RD).

7. The method according to any of claims 1 to 6, wherein the acquired field strength measurement (LC1) is a multi-bit word, the method comprising selecting an operating point of the digital circuits (MC) from a plurality of operating points each defined by a clock circuit control value (CKC1) associated with a power circuit control value (PS1).

8. The method according to any of claims 1 to 7, wherein acquiring a field strength measurement comprises steps of:
tapping a first fraction of a first rectified current (DI1) between a rectified current output (RC) from the antenna coil (AC) and a first terminal (RF1) of the antenna coil,
tapping a second fraction (DI2) of the rectified current, between the rectified current output from the antenna coil and a second terminal (RF2) of the antenna coil,
generating a measurement current (DI) by adding the first and second rectified current fractions,
filtering the measurement current, and
converting the filtered current (FDI) into a digital measurement value (CM1) representative of the filtered current.

9. A contactless microcircuit comprising:
an antenna coil (AC) for receiving and transmitting signals of a contactless communication by means of a modulated electromagnetic field,
a primary supply circuit (PWE) for extracting from the antenna coil a supply current (RC) arising when the antenna coil is placed in a variable electromagnetic field,
a field measurement circuit (IMS) configured to measure a field strength received by the antenna coil,
a clock circuit (CKC, CKC1) and a voltage regulation circuit (PS, PS1), and
digital circuits (MC, IMC, CIC) configured to detect an event (EV) in the contactless microcircuit (CI), and upon detection of the event:
triggering the measurement circuit to measure a received field strength,
acquiring a field strength (LC) measurement using the measurement circuit,
deactivating the measurement circuit when the field measurement is acquired, and
controlling the clock circuit and/or the voltage regulation circuit according to the acquired field strength, to reduce a power consumption of the digital circuits when the field strength is below a threshold value (VT).

10. The microcircuit of claim 9, wherein the digital circuits comprise a processor (MC) that is disabled during acquisition of the field measurement.

11. The microcircuit of claim 9 or 10, wherein the digital circuits (CIC, IMC, MC) are configured to detect an end-of-frame signal (EOF) in the field received by the antenna coil (AC), the end-of-frame signal being the event to be detected (EV) to trigger a field measurement.

12. The microcircuit of any of claims 9 to 11, wherein the clock circuit (CKC1) is configured to generate more than two clock signal frequencies, depending on a control word (LC1), the microcircuit (CI) being configured to determine the control word of the clock circuit depending on the acquired field measurement, and to provide the control word to the clock circuit.

13. The microcircuit according to any of claims 9 to 12, wherein the voltage regulation circuit (PS1) is configured to provide a supply voltage (PV) dependent on a control word (LC1), the microcircuit (CI) being configured to determine the control word of the voltage regulation circuit in dependence on the acquired field measurement (CM1), and to provide the control word to the voltage regulation circuit.

14. The microcircuit of any of claims 9 to 13, wherein the measurement circuit is configured to:
tap a first fraction (DI1) of a rectified current from the antenna coil (AC), between a rectified current output (RC) and a first terminal (RF1) of the antenna coil,
tap a second fraction (DI2) of the rectified current from the antenna circuit (AC), between the rectified current output and a second terminal (RF2) of the antenna coil,
generate a measurement current (DI) by adding the first and second rectified current fractions,
filter the measurement current, and
convert the filtered current (FDI) into a digital measurement value (CM1) representative of the filtered current.
